# DEMANDE DE BREVET EUROPEEN

(11) **EP 0 708 231 A1**
(43) Date de publication de la demande: **24.04.1996**
(21) Numéro de dépôt: 95116263.5
(22) Date de dépôt: 16.10.1995
(51) Int. Cl.: F02B 29/04

(54) **Dispositif de commande du refroidissement de l'air de suralimentation d'un moteur thermique**

(30) Priorité: 21.10.1994 FR 9412628
(71) Demandeur: VALEO THERMIQUE MOTEUR, F-78320 Le Mesnil Saint-Denis (FR)
(72) Inventeur: Laveran, Jean-Louis, F-92600 Asnieres (FR)
(74) Mandataire: Gamonal, Didier

(57) **Abrégé**

Un volet pivotant, commandé par un vérin pneumatique (7) par l'intermédiaire d'une pièce de raccordement (10) et d'un levier (11) solidaire du volet, permet de faire passer ou non l'air de suralimentation dans un radiateur de refroidissement, en fonction de sa température.
Selon l'invention, le dispositif de commande comprend, outre le vérin principal (7), deux vérins auxiliaires de sécurité (12, 13) associés à des pièces de butée (29, 30) qui coopèrent avec la pièce de raccordement (10) pour empêcher la tige (9) du vérin principal de sortir et d'amener le volet dans une position telle que l'air de suralimentation ne traverse plus le radiateur de refroidissement. Les deux vérins auxiliaires (12, 13) interviennent pour empêcher la sortie de la tige du vérin principal respectivement en cas de défaillance de la pression d'alimentation des vérins, et lorsque la pression de l'air de suralimentation excède un seuil.

## Description

L'invention concerne un dispositif de commande de la température de l'air de suralimentation d'un moteur thermique, notamment d'un moteur d'entraînement de véhicule, comprenant des moyens de refroidissement interposés entre un compresseur d'air de suralimentation et l'entrée d'air du moteur, et des moyens de commutation propres à diriger un flux d'air provenant du compresseur, en fonction de sa température, soit vers lesdits moyens de refroidissement, soit directement vers l'entrée du moteur à travers une conduite de dérivation, les moyens de commutation comprenant un obturateur mobile, et un élément élastique d'actionnement sollicitant l'obturateur mobile vers une première position pour laquelle le compresseur communique avec la conduite de dérivation, associé à un vérin d'actionnement propre à forcer l'obturateur, contre l'action de l'élément élastique d'actionnement, dans une seconde position pour laquelle le compresseur communique avec les moyens de refroidissement.

Dans les dispositifs connus de ce genre, lorsque la pression d'alimentation, pneumatique ou hydraulique, du vérin d'actionnement fait défaut pour une raison quelconque, alors que ce vérin est commandé de façon à envoyer l'air dans les moyens de refroidissement, le vérin ne peut plus s'opposer à l'action de l'élément élastique, lequel ramène l'obturateur dans sa première position. L'air de suralimentation n'est donc plus refroidi et pénètre dans le moteur à une température trop élevée, ce qui risque d'endommager celui-ci.

Par ailleurs, il est souhaitable que l'air de suralimentation ne pénètre pas dans le moteur à une pression trop élevée. Pour cette raison, il peut être utile de faire passer l'air dans les moyens de refroidissement pour y subir une perte de charge, même quand son refroidissement n'est plus nécessaire.

Le but de l'invention est d'éviter une température excessive de l'air de suralimentation en cas de défaillance de l'alimentation du vérin d'actionnement, ou une pression excessive de l'air de suralimentation, et plus généralement de maintenir l'obturateur dans sa seconde position lorsque les circonstances le demandent, même si le vérin d'actionnement est désactivé.

L'invention vise notamment un dispositif du genre défini en introduction, et prévoit qu'il comprend au moins un élément élastique de blocage associé à un élément de butée et à un vérin de déblocage, l'élément élastique de blocage sollicitant l'élément de butée dans une première position qu'il ne peut atteindre que lorsque l'obturateur est dans sa seconde position et où il interdit le retour de celui-ci dans sa première position, et le vérin de déblocage étant propre à forcer l'élément de butée, contre l'action de l'élément élastique de blocage, dans une seconde position dans laquelle il libère le mouvement de l'obturateur.

D'autres caractéristiques, complémentaires ou alternatives, du dispositif selon l'invention sont énoncées ci-après :
- Il comprend des moyens pour activer un vérin de déblocage, parallèlement à la désactivation du vérin d'actionnement, lorsque la température de l'air de suralimentation est inférieure à une valeur au-dessus de laquelle son passage dans les moyens de refroidissement est souhaité. Ce vérin de déblocage est donc désactivé lorsque la température de l'air est supérieure à cette valeur, permettant à l'élément élastique de blocage d'amener l'élément de butée dans sa première position. En cas de défaillance de la pression d'alimentation, le vérin d'actionnement est désactivé et le vérin de déblocage reste bien entendu désactivé. L'élément de butée empêche alors l'élément élastique d'actionnement de ramener l'obturateur dans sa première position.
- Il comprend des moyens pour activer un vérin de déblocage, indépendamment du vérin d'actionnement, lorsque la pression de l'air de suralimentation est inférieure à une valeur audessus de laquelle son passage dans les moyens de refroidissement est souhaité quelle que soit sa température. Lorsque la température et la pression de l'air sont toutes deux supérieures aux seuils d'activation du vérin d'actionnement et du vérin de déblocage, le premier est activé et le second désactivé, de sorte que l'obturateur est immobilisé dans sa seconde position par l'élément de butée. Un abaissement de la température, non accompagné d'un abaissement de la pression, entraîne alors la désactivation du vérin d'actionnement mais ne permet pas le retour de l'obturateur dans sa première position.
- L'élément de butée est monté à l'extrémité de la tige du vérin de déblocage.
- L'axe du vérin de déblocage est perpendiculaire à l'axe du vérin d'actionnement, la tige de ce dernier portant un élément d'appui présentant une face d'appui latérale qui s'étend parallèlement à l'axe du vérin d'actionnement et une face d'appui frontale qui s'étend parallèlement à l'axe du vérin de déblocage, tournée dans le sens de l'action de l'élément élastique d'actionnement, la face d'appui latérale venant en regard de l'élément de butée lorsque l'obturateur n'est pas dans sa seconde position et la face d'appui frontale venant sensiblement en contact avec l'élément de butée lorsque celui-ci est dans sa première position et que l'obturateur est dans sa seconde position, l'activation de chacun des vérins d'actionnement et de déblocage provoquant la rétraction de la tige correspondante.
- Il comprend deux vérins de déblocage dont les axes s'étendent dans une même direction et auxquels sont associées respectivement deux faces d'appui latérales constituées par les faces extérieures des branches d'un même élément d'appui en forme de U, les extrémités libres desdites branches formant des faces d'appui frontales pour les éléments de butée des deux vérins de déblocage respectivement.

Les caractéristiques et avantages de l'invention seront exposés plus en détail dans la description ci-après, en se référant aux dessins annexés, sur lesquels :
- La figure 1 est une vue partielle en élévation des moyens de commutation d'un dispositif selon l'invention ;
- Les figures 2 et 3 sont des vues partielles de dessus de ces mêmes moyens de commutation, pour des positions différentes des vérins d'actionnement et de déblocage ; et
- La figure 4 est une vue partielle en coupe selon la ligne IV-IV de la figure 1, pour la position du vérin d'actionnement montré à la figure 3.

Le dispositif de commutation illustré comprend de façon connue un volet 1 monté pivotant dans un boîtier de commutation 2, autour d'un axe vertical 3, de façon à se situer sensiblement dans un plan vertical variable. L'intérieur du boîtier 2 définit une chambre 4 qui communique avec l'extérieur par trois raccords d'entrée/sortie, à savoir un raccord d'entrée non représenté recevant l'air comprimé et chauffé provenant d'un turbo-compresseur d'air de suralimentation, et deux raccords de sortie 5 et 6 par lesquels l'air peut sortir respectivement pour parcourir une conduite de dérivation non représentée le conduisant directement, sans être refroidi, à l'entrée d'air du moteur, et pour traverser un radiateur de refroidissement avant d'atteindre l'entrée du moteur.

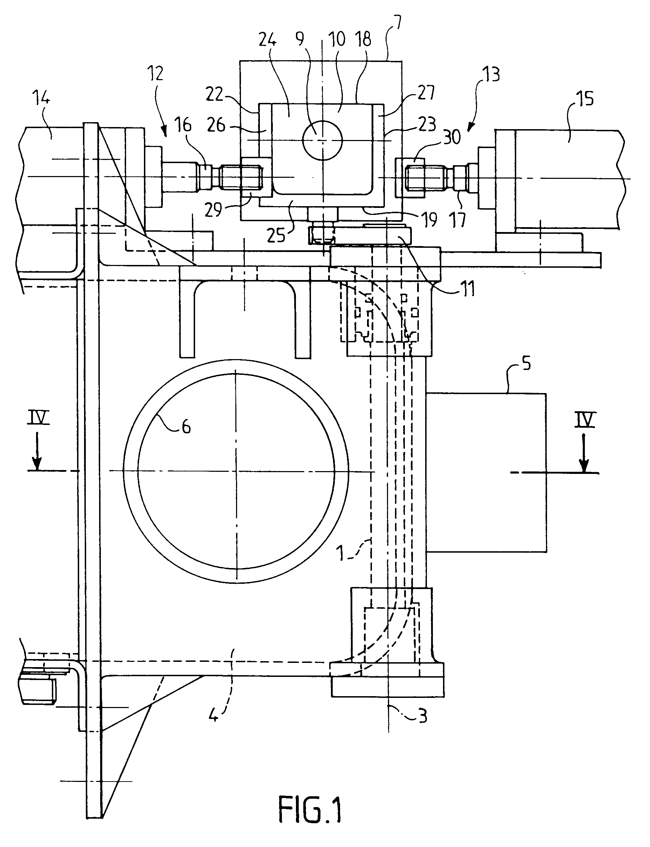

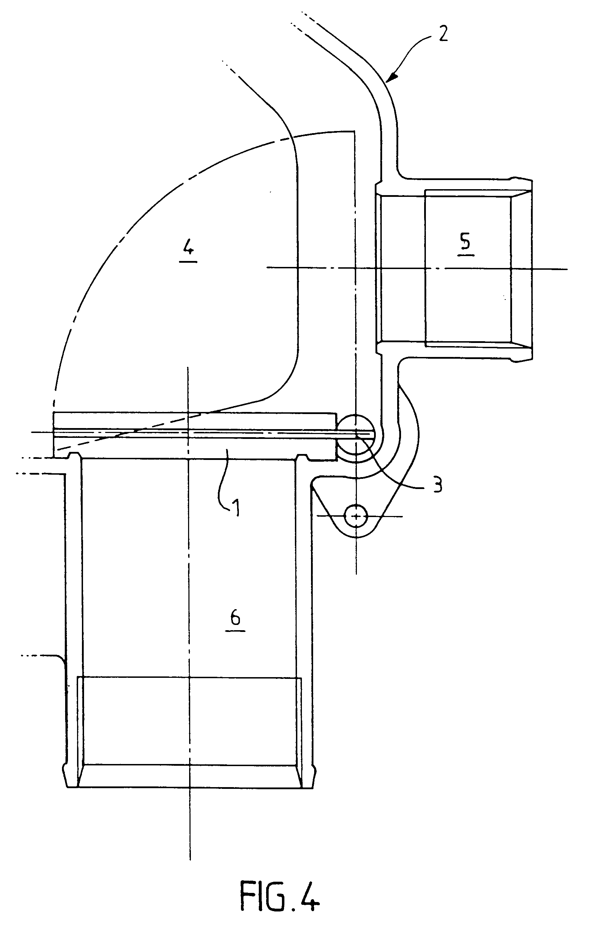

Le volet 1 peut pivoter d'un angle de 90° entre une position, montrée à la figure 1, où il obture le raccord de sortie 5, obligeant l'air de suralimentation à passer par le raccord 6 et par le radiateur de refroidissement, et une position illustrée à la figure 4, où il obture au contraire le raccord 6, l'air sortant alors par le raccord 5 et n'étant pas refroidi.

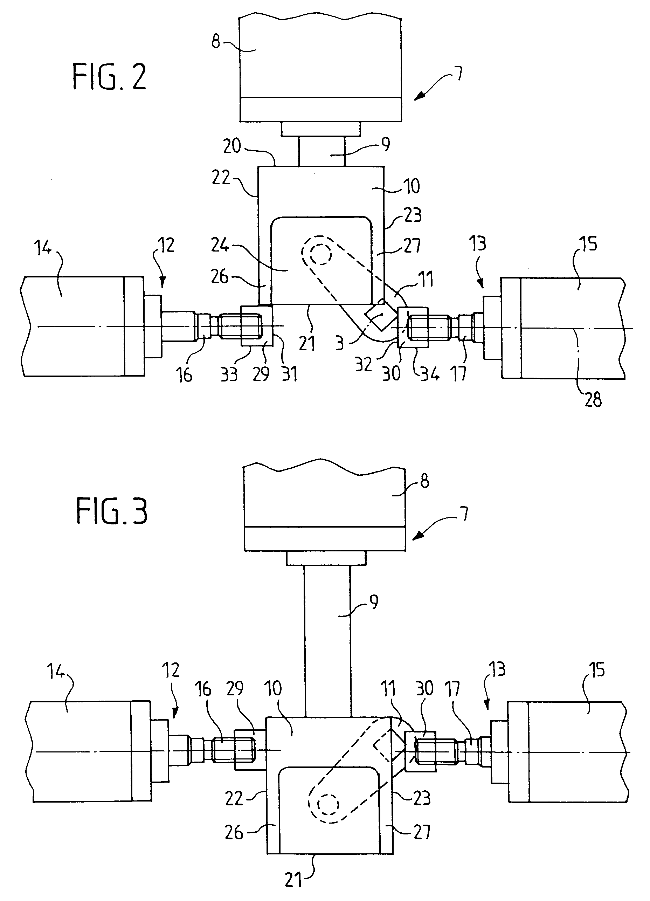

Toujours de façon connue, le volet 1 est entraîné par un vérin pneumatique 7 associé à un ressort de rappel non représenté. Le vérin 7 comprend un cylindre fixe 8 et une tige coulissante 9 à l'extrémité libre de laquelle est montée une pièce de raccordement 10 qui est reliée à un levier horizontal 11 solidaire du volet 1, de telle façon que ce dernier prenne sa première position lorsque la tige 9 est rétractée (figures 1 et 2) et sa seconde position lorsque la tige 9 est sortie (figures 3 et 4). La tige est en position rétractée lorsque le vérin est activé, et le ressort de rappel la sollicite vers sa position sortie.

L'invention prévoit deux vérins de déblocage 12 et 13, associés à des ressorts antagonistes respectifs dits de blocage, pour empêcher, dans des circonstances détérminées, la tige 9 du vérin d'actionnement de sortir sous l'action du ressort correspondant, dit ressort d'actionnement. Les vérins pneumatiques 12 et 13 comprennent des cylindres respectifs 14 et 15 et des tiges respectives 16 et 17. Ces dernières coopèrent avec la pièce de raccordement 10 qui présente à ces effet une configuration particulière. La pièce 10 a une forme générale parallélépipédique rectangle munie d'une face supérieure 18 et d'une face inférieure 19 horizontales, d'une face arrière 20 tournée vers le cylindre 8, d'une face avant 21 opposée à la face arrière et de deux faces latérales 22 et 23, les faces 20 à 23 étant verticales. Le levier 11 est en regard de la face inférieure 19. La pièce présente un large évidement 24 qui débouche dans les faces 18 et 21. Entre cet évidement d'une part et les faces 19, 22 et 23 d'autre part subsistent des lames de matière relativement minces respectivement 25, 26 et 27.

Les tiges 16 et 17 des vérins 12 et 13 ont un même axe horizontal 28 perpendiculaire à l'axe horizontal de la tige 9. A l'extrémité libre des tiges 16 et 17, tournées l'une vers l'autre, sont fixées des pièces de butée respectives 29, 30 de forme générale cylindrique de révolution, présentant chacune une face avant plane 31, 32 et une face latérale cylindrique 33, 34.

La tige 17 du vérin 13 est représentée aux figures 1 à 3 en position rétractée. La pièce de butée correspondante 30 se trouve alors en retrait du plan contenant la face latérale 23, tournée vers le corps 15, de la pièce de raccordement 10. La tige 9 du vérin 7 peut alors passer de sa position rétractée (figures 1 et 2) à sa position sortie (figure 3) sans que la pièce 30 gêne le déplacement de la pièce 10.

En revanche, aux figures 1 et 2, la tige 16 du vérin 12 est dans sa position sortie et la pièce de butée correspondante 29 traverse le plan de la face latérale 22 de la pièce 10 tournée vers le corps 14 du même vérin. La tige ne peut donc prendre cette position que lorsque celle 9 du vérin 7 est rétractée. La branche 26 de la pièce 10 vient alors en appui, par la face avant 21, sur la face latérale cylindrique 33 de la pièce 31 pour empêcher la tige 9 de sortir. Si la tige 16 tend à sortir alors que la tige 9 est elle-même sortie, la face d'extrémité 31 de la pièce 29 vient en butée sur la face latérale 22 de la pièce 10, ce qui limite le mouvement de la tige 16, comme montré à la figure 3.

La pièce 10 étant symétrique, et les tiges 16 et 17 et les pièces 29 et 30 symétriques les unes des autres, par rapport au plan vertical contenant l'axe de la tige 9, les modes d'action exposés ci-dessus pour chacune des pièces 29 et 30 sont également valables pour l'autre.

On décrira maintenant le fonctionnement du dispositif.

Les vérins 7, 12 et 13 sont commandés par des moyens de commande non représentés de façon que :
- les tiges des vérins 7 et 12 soient rentrées lorsque la température de l'air de suralimentation est supérieure et inférieure respectivement à un seuil, par exemple 50°C, au-dessus duquel on souhaite qu'il circule dans le radiateur de refroidissement ;
- la tige du vérin 13 soit rentrée lorsque la pression de l'air de suralimentation est inférieure à un seuil, par exemple 1,4 bar, au-dessus duquel on souhaite qu'il traverse le radiateur de refroidissement, quelle que soit sa température.

Le ressort de rappel associé à chaque vérin tend à faire sortir la tige, contre l'action pneumatique du vérin.

Lorsque le moteur du véhicule est à l'arrêt, la pression dans le circuit pneumatique d'alimentation des vérins est nulle et les vérins sont désactivés. Au démarrage du moteur, la pression nécessaire à l'activation des vérins, par exemple 5 bars, s'établit avant que la température et la pression de l'air de suralimentation ait atteint les seuils précités. Les tiges des vérins auxiliaires 12 et 13 sont alors rétractées, permettant à la tige du vérin principal 7 de sortir sous l'effet du ressort d'actionnement.

Lorsque la température de l'air de suralimentation dépasse le seuil de commutation (50°C), les vérins 7 et 12 sont activés et désactivés respectivement de façon à rentrer la tige 9 et à permettre à la tige 16 de sortir sous l'effet du ressort de blocage correspondant. On obtient alors la position illustrée aux figures 1 et 2. Si à ce moment la pression fait défaut dans le circuit pneumatique, le vérin 7 est désactivé mais la pièce 31, formant butée pour la pièce 10, empêche la tige 9 de ressortir sous l'effet du ressort d'actionnement, de sorte que l'air de suralimentation continue d'être envoyé dans le radiateur de refroidissement.

Si la pression de l'air de suralimentation vient à dépasser 1,4 bar, le vérin 13 est désactivé et le ressort correspondant fait sortir la tige 17, qui vient dans une position symétrique de celle illustrée pour la tige 16 aux figures 1 et 2, la pièce 30 formant butée pour l'extrémité libre de la branche 27 de la pièce 10. Si par la suite la température de l'air de suralimentation est ramenée au-dessous de 50°C alors que sa pression reste supérieure à 1,4 bar, la tige 16 du vérin 12 rentre mais la tige 9 du vérin 7 est néanmoins empêchée de sortir par la pièce 30.

Pour que la tige 9 puisse de nouveau sortir, pendant le fonctionnement du moteur, et que l'air de suralimentation cesse de traverser le radiateur de refroidissement, il faut que la température et la pression de l'air de suralimentation soient toutes deux ramenées au-dessous des seuils de commutation correspondants.

## Revendications

1. Dispositif de commande de la température de l'air de suralimentation d'un moteur thermique, notamment d'un moteur d'entraînement de véhicule, comprenant des moyens de refroidissement interposés entre un compresseur d'air de suralimentation et l'entrée d'air du moteur, et des moyens de commutation propres à diriger un flux d'air provenant du compresseur, en fonction de sa température, soit vers lesdits moyens de refroidissement, soit directement vers l'entrée du moteur à travers une conduite de dérivation, les moyens de commutation comprenant un obturateur mobile (1), et un élément élastique d' actionnement sollicitant l'obturateur mobile vers une première position pour laquelle le compresseur communique avec la conduite de dérivation, associé à un vérin d'actionnement (7) propre à forcer l'obturateur, contre l'action de l'élément élastique d'actionnement, dans une seconde position pour laquelle le compresseur communique avec les moyens de refroidissement, caractérisé en ce qu'il comprend au moins un élément élastique de blocage associé à un élément de butée (29, 30) et à un vérin de déblocage (12, 13), l'élément élastique de blocage sollicitant l'élément de butée dans une première position qu'il ne peut atteindre que lorsque l'obturateur est dans sa seconde position et où il interdit le retour de celui-ci dans sa première position, et le vérin de déblocage étant propre à forcer l'élément de butée, contre l'action de l'élément élastique de blocage, dans une seconde position dans laquelle il libère le mouvement de l'obturateur.

2. Dispositif selon la revendication 1, caractérisé en ce qu'il comprend des moyens pour activer un vérin de déblocage (12), parallèlement à la désactivation du vérin d'actionnement (7), lorsque la température de l'air de suralimentation est inférieure à une valeur au-dessus de laquelle son passage dans les moyens de refroidissement est souhaité.

3. Dispositif selon l'une des revendications 1 et 2, caractérisé en ce qu'il comprend des moyens pour activer un vérin de déblocage (13), indépendamment du vérin d'actionnement, lorsque la pression de l'air de suralimentation est inférieure à une valeur au-dessus de laquelle son passage dans les moyens de refroidissement est souhaité quelle que soit sa température.

4. Dispositif selon l'une des revendications précédentes, caractérisé en ce que l'élément de butée (29, 30) est monté à l'extrémité de la tige (16, 17) du vérin de déblocage.

5. Dispositif selon la revendication 4, caractérisé en ce que l'axe (28) du vérin de déblocage est perpendiculaire à l'axe du vérin d'actionnement, la tige de ce dernier portant un élément d'appui (10) présentant une face d'appui latérale (22, 23) qui s'étend parallèlement à l'axe du vérin d'actionnement et une face d'appui frontale (21) qui s'étend parallèlement à l'axe du vérin de déblocage, tournée dans le sens de l'action de l'élément élastique d'actionnement, la face d'appui latérale venant en regard de l'élément de butée lorsque l'obturateur n'est pas dans sa seconde position et la face d'appui frontale venant sensiblement en contact avec l'élément de butée lorsque celui-ci est dans sa première position et que l'obturateur est dans sa seconde position, l'activation de chacun des vérins d'actionnement et de déblocage provoquant la rétraction de la tige correspondante.

6. Dispositif selon la revendication 5, caractérisé en ce qu'il comprend deux vérins de déblocage (12, 13) dont les axes s'étendent dans une même direction et auxquels sont associées respectivement deux faces d'appui latérales (22, 23) constituées par les faces extérieures des branches (26, 27) d'un même élément d'appui en forme de U, les extrémités libres (21) desdites branches formant des faces d'appui frontales pour les éléments de butée (29, 30) des deux vérins de déblocage respectivement.
